Europäisches Patentamt

European Patent Office

Office européen des brevets

(19)

(11) Numéro de publication: **0 178 218 B1**

(12) **FASCICULE DE BREVET EUROPEEN**

(45) Date de publication du fascicule du brevet:
**01.06.88**

(21) Numéro de dépôt: **85401906.4**

(22) Date de dépôt: **01.10.85**

(51) Int. Cl.⁴: **B 32 B 3/24,** B 65 D 65/40,
A 23 B 7/148

(54) Complexe multicouche, notamment pour emballer des produits alimentaires frais.

(30) Priorité: **03.10.84 FR 8415189**

(43) Date de publication de la demande:
**16.04.86 Bulletin 86/16**

(45) Mention de la délivrance du brevet:
**01.06.88 Bulletin 88/22**

(84) Etats contractants désignés:
**AT BE CH DE FR GB IT LI LU NL SE**

(56) Documents cités:
**FR - A - 1 400 168**
**FR - A - 1 468 506**
**FR - A - 1 483 025**
**FR - A - 2 555 731**

(73) Titulaire: **SOCIETE CONTINENTALE DU CARTON ONDULE SOCAR Société Anonyme dite:, 5 - 7, Avenue du Général de Gaulle, F-94160 Saint-Mandé (FR)**

(72) Inventeur: **Dropsy, Philippe, 12, rue Le Joly, F-33400 Talence (FR)**

(74) Mandataire: **Brot, Philippe et al, CABINET BROT et JOLLY 83, rue d'Amsterdam, F-75008 Paris (FR)**

ACTORUM AG

## Description

On sait que les fruits et les légumes conservent après leur cueillette une respiration propre. La rapidité des échanges gazeux avec le milieu ambiant est la raison principale du vieillissement et de la détérioration de ces denrées.

En vue de réduire l'importance de la respiration et de l'exsudation il est connu de conserver les fruits et légumes frais dans une atmosphère froide. C'est ainsi que l'on a constaté que 750 grammes de fraises à l'air absorbent à 20°C environ 3 litres d'oxygène et restituent 3 litres de gaz carbonique par jour. Si la température ambiante est de 5°C, la consommation en oxygène tombe à 0,8 litre par jour.

Selon un autre procédé connu, les échanges avec l'extérieur sont ralentis en les enveloppant d'un film en matière plastique qui a une perméabilité plus ou moins élevée vis-à-vis de l'humidité, aussi bien vers l'intérieur que vers l'extérieur de l'emballage.

C'est ainsi que l'on connaît par le brevet GB-A 696 373 un complexe multicouche destiné à envelopper de la viande fraîche, en vue de retenir la quantité optimale d'humidité dans l'emballage. Ce complexe comprend une couche formée de fibres absorbantes, donc poreuse, et un film de matière synthétique perméable à l'eau, qui est percé d'une multitude de fines perforations, et qui est collé sur ladite couche. La couche en fibres absorbantes est tournée du côté de la viande et sert donc à absorber l'humidité interne et à l'évacuer à travers ses pores vers l'extérieure.

D'autre part, c'est elle qui confère une bonne résistance mécanique au complexe. Quant au film, il règle l'évaporation de l'exsudat à travers ses perforations, mais n'a aucun rôle mécanique. Si un tel complexe convient parfaitement pour emballer de la viande, il est tout à fait inefficace en ce qui concerne les fruits et légumes frais. Comme on l'a déjà précisé en effet, ces derniers échangent avec le milieu extérieur, principalement des gaz, tels que l'oxygène et le gaz carbonique, mais très peu de matières liquides. La couche fibreuse présentant une porosité élevée, on comprend que si l'on utilisait un tel complexe pour emballer les légumes et les fruits frais, les échanges gazeux à travers ladite couche se feraient sans pratiquement aucun ralentissement, de sorte que les fruits et les légumes se détérioreraient rapidement.

D'autre part, le brevet FR-A 1 483 025 concerne un complexe feuilleté présentant les mêmes inconvénients que le précédent, puisqu'il comporte une couche poreuse en papier de bonne résistance mécanique qui est recouverte d'un film perforé en matière synthétique. De plus, ce complexe sert à réaliser des sachets pour le conditionnement de produits déshydratants en poudre, destinés à absorber l'humidité de l'atmosphère extérieure. La quantité de vapeur d'eau passant à travers un tel complexe est relativement faible. Au contraire, dans le cas de l'application selon la demande au conditionnement de produits alimentaires frais, l'humidité dégagée est beaucoup plus importante. Si l'on utilisait un complexe selon le brevet susmentionné, la couche de papier risquerait à la longue d'être dégradée par la vapeur d'eau qui la traverse.

On connaît encore le brevet FR-A 1 400 168 qui concerne un complexe feuilleté, mais le problème que ce brevet cherche à résoudre est celui d'augmenter la résistance à la déchirure du complexe.

Le brevet FR-A 2 355 731 concerne un complexe feuilleté dans lequel les deux couches qui le composent ont respectivement des perméabilités inverses vis-à-vis de l'oxygène et de la vapeur d'eau, de sorte que le complexe est globalement imperméable vis-à-vis de ces deux éléments. La demande au contraire cherche à proposer un complexe ayant une perméabilité contrôlée vis-à-vis de l'oxygène et de la vapeur d'eau.

On connaît enfin le brevet FR-A 2 227 125 qui concerne un revêtement complexe pour emballer des produits frais, et qui comprend une couche de matière fibreuse, telle que du papier qui est recouverte d'un film de matière synthétique sur lequel on forme des perforations.

Ce revêtement présente les mêmes inconvénients que ceux des deux brevets précédents, et de plus, compte tenu du procédé de formation de perforations, ces dernières sont distribuées au hasard sur la surface du film et leurs dimensions sont irrégulières. Il est donc difficile avec un tel complexe de régler l'importance des échanges gazeux alors que l'on n'est pas maître de la densité des perforations.

La présente invention a pour but de remédier à tous ces inconvénients de la technique antérieure citée, et propose donc un complexe feuilleté qui ait à la fois une bonne résistance mécanique et une perméabilité contrôlée vis-à-vis des échanges gazeux. Le complexe feuilleté selon l'invention se caractérise en ce qu'il comprend un film poreux aux gaz, de faible résistance mécanique, et une couche non poreuse de bonne résistance mécanique et percée de perforations dont la densité, les dimensions et les positions sont choisies de manière à ce qu'elles n'affaiblissent pas le complexe, ledit film et ladite couche étant réalisés en matière synthétiques non fibreuses.

Il est indifférent selon l'invention que le film poreux soit tourné du côté intérieur vers les fruits et légumes et la couche perforée soit tournée vers l'extérieur, car les deux couches ont des rôles complémentaires: en raison de sa porosité et de sa faible épaisseur, le film assure les échanges gazeux avec le milieu extérieur mais par contre ne peut supporter aucun effort mécanique, tandis que l'autre couche sert à conférer au complexe toute sa résistance mécanique, mais ne participe pratiquement pas aux échanges gazeux. Toutefois, pour ne pas obturer tous les pores du film, il est nécessaire de prévoir des perforations sur la couche résistante.

Ainsi, pour obtenir une porosité donnée pour le complexe, qui convienne à un type particulier de denrée, on peut utiliser un film poreux ayant ladite porosité et sur laquelle on colle une couche résistante dont les trous sont suffisamment dispersés pour qu'ils ne modifient pas la porosité du film. Pour chaque denrée particulière, on devrait alors choisir un film spécifique ayant la porosité souhaitée.

Mais on comprend qu'il est possible de régler la porosité globale du complexe en mettant en jeu les actions complémentaires du film et de la couche résistante. Ainsi, on pourra utiliser pour tous les types de denrées à conditionner, toujours le même film poreux ayant la porosité maximale permise pour la denrée qui présente l'activité respiratoire la plus développée et coller sur ce film des couches résistantes ayant respectivement des densités et des dimensions de trous différentes d'une couche à l'autre, de manière que lesdits trous en obturant certains pores du film sousjacent modifie la porosité de ce dernier. On peut ainsi obtenir toutes les porosités voulues comprises entre la porosité nulle et la porosité maximale susmentionnée.

Dans tous les cas on obtient une respiration contrôlée des produits emballés.

Le complexe selon l'invention est remarquable en ce que les perforations sont formées sur la couche résistante et il diffère en cela de tous les brevets de la technique antérieure citée où les trous sont formés sur le film synthétique. Cette caractéristique est inattendue car il est à première vue paradoxal de perforer la couche qui confère au complexe sa résistance mécanique. L'invention consiste à choisir de façon optimale la densité des perforations et leurs dimensions pour que ladite couche ne soit pas affaiblie.

Le complexe permet ainsi de fournir aux produits frais emballés une partie de l'oxygène qu'ils auraient consommée s'ils étaient à l'air libre. Il permet de renouveler la réserve d'oxygène tout en éliminant le gaz carbonique formé et cela dans des conditions bien meilleures qu'avec les complexes selon les brevets cités.

Il peut être utilisé avec tous types d'emballages connus. Par exemple, il peut servir à réaliser des enceintes hermétiques, telles que sacs ou sachets, ou encore à sceller ou operculer des barquettes. On arrive à maintenir à l'intérieur desdites enceintes une teneur en oxygène de 2 à 10% en volume, selon la nature des produits emballés.

Des fraises emballées dans des barquettes scellées avec le complexe selon l'invention et entreposées dans une atmosphère à 5°C ont pu être conservées pendant plus de 10 jours sans altération de leur qualité, ni de leur saveur.

Selon l'invention, le film poreux aussi bien que la couche résistante sont réalisés en matières synthétiques non fibreuses.

**Revendications**

1. Complexe multicouche pour emballer des produits alimentaires frais, tels que légumes et fruits, caractérisé en ce qu'il comprend un film poreux aux gaz, de faible résistance mécanique, et une couche non poreuse de bonne résistance mécanique et percée de perforations dont la densité, les dimensions et les positions sont choisies de manière à ce qu'elles n'affaiblissent pas le complexe, le film poreux et la couche résistante étant réalisés en des matières synthétiques non fibreuses.

2. Complexe multicouche selon la revendication 1, caractérisé en ce qu'il présente une porosité globale prédéterminée, conférée uniquement par le film poreux, les trous de la couche résistante étant suffisamment dispersés pour qu'ils ne modifient pas la porosité du film.

3. Complexe multicouche selon la revendication 1, caractérisé en ce que le film poreux et la couche résistante ont respectivement une porosité et des perforations choisies pour avoir des actions complémentaires, conférant au complexe une porosité globale prédéterminée.

4. Complexe multicouche selon la revendication 3, caractérisé en ce que pour tous les types de denrées à conditionner, le film poreux utilisé a la porosité maximale permise pour la denrée qui présente l'activité respiratoire la plus développée, les perforations de la couche résistante étant disposées de manière que par obturation de certains pores du film, la porosité de ce dernier soit réduite à la valeur souhaitée.

5. Emballage tel que sac, sachet ou barquette réalisé ou obturé au moyen du complexe feuilleté selon l'une des revendications précédentes, caractérisé en ce que le film poreux est de préférence tourné du côté intérieur de l'emballage.

**Patentansprüche**

1. Mehrschichtiger Komplex zum Verpacken von frischen Nahrungsmitteln, wie Obst und Gemüse, dadurch gekennzeichnet, dass er eine gasdurchlässige Folie mit geringer mechanischer Festigkeit und eine undurchlässige Schichte mit guter mechanischer Festigkeit, welche mit Durchbrechungen versehen ist, deren Dichte, Abmessungen und Positionen so gewählt sind, dass sie den Komplex nicht schwächen, aufweist, wobei die poröse Folie und die widerstandsfähige Schichte aus nicht faserigem Kunststoff hergestellt sind.

2. Mehrschichtiger Komplex nach Anspruch 1, dadurch gekennzeichnet, dass er eine vorbestimmte Gesamtporosität aufweist, welche nur von der porösen Folie stammt, wobei die Löcher der widerstandsfähigen Schichte ausreichend verstreut sind, um die Porosität der Folie nicht zu verändern.

3. Mehrschichtiger Komplex nach Anspruch 1, dadurch gekennzeichnet, dass die poröse Folie und die widerstandsfähige Schichte einerseits eine Porosität und andererseits Durchbrechungen aufweisen, die so gewählt sind, dass sie einander ergänzen und dem Komplex eine vorbestimmte Gesamtporosität verleihen.

4. Mehrschichtiger Komplex nach Anspruch 3, dadurch gekennzeichnet, dass für alle zu behandelnden Nahrungsmittel die verwendete poröse Folie die maximale zulässige Porosität für das Nahrungsmittel mit der grössten Atmungsaktivität besitzt, wobei die Durchbrechungen der widerstandsfähigen Schichte so positioniert sind, dass sie gewisse Poren der Folie abdecken, wodurch die Porosität der Folie auf den gewünschten Wert herabgesetzt wird.

5. Verpackung, wie ein Sack, ein Säckchen oder ein Behälter, welche aus dem geschichteten Komplex nach einem der vorangehenden Ansprüche gefertigt oder damit abgedeckt ist, dadurch gekennzeichnet, dass sich die poröse Folie vorzugsweise an der Innenseite der Verpackung befindet.

**Claims**

1. A multi-layer composite material for wrapping fresh food products such as vegetables and fruit characterised in that it comprises a film which is porous with respect to gases, of low mechanical strength, and a non-porous layer which has good mechanical strength and which is pierced with perforations whose density, dimensions and positions are so selected that they do not weaken the composite material, the porous film and the strong layer being made of non-fibrous synthetic materials.

2. A multi-layer composite material according to claim 1 characterised in that it has a predetermined overall porosity which is imparted solely by the porous film, the holes in the strong layer being sufficiently dispersed for them not to modify the porosity of the film.

3. A multi-layer composite material according to claim 1 characterised in that the porous film and the strong layer are of a porosity and have perforations selected respectively to have complementary actions, imparting a predetermined overall porosity to the composite material.

4. A multi-layer composite material according to claim 3 characterised in that, for all the types of produce to be packaged, the porous film used has the maximum porosity permitted for the produce which has the most highly developed respiratory activity, the perforations in the strong layer being disposed in such a way that by virtue of certain pores in the film being closed, the porosity of the film is reduced to the desired value.

5. A wrapping such as a sack, bag or boat-shaped receptacle which is made or closed by means of the laminate composite material according to any one of the preceding claims characterised in that the porous film is preferably directed inwardly of the wrapping.